# EUROPEAN PATENT APPLICATION

(11) **EP 2 591 888 A1**
(43) Date of publication of application: **15.05.2013**
(21) Application number: 12191243.0
(22) Date of filing: 05.11.2012
(51) Int. Cl.: B25J 9/16

(54) **Assembling apparatus and method, and assembling operation program**

(30) Priority: 08.11.2011 JP 2011244282
(71) Applicant: Dainippon Screen Mfg. Co., Ltd., Kyoto 602-8585 (JP)
(72) Inventor: Onishi, Hiroyuki, Kyoto-shi, Kyoto 602-8585 (JP)
(74) Representative: Kilian Kilian & Partner

(57) **Abstract**

In an assembling apparatus according to the present invention, a control portion controls an operation of a working portion such that a first reference position, which corresponds to a first reference point of an assembling component defined in three-dimensional model data of the assembling component, and a second reference position, which corresponds to a second reference point of the assembling component defined in three-dimensional model data of an assembled component, are associated with each other. Therefore, it is possible to carry out an assembling operation properly and efficiently irrespective of a positional shift of the assembled component.

## Description

### BACKGROUND OF THE INVENTION

### Field of the Invention

The present invention relates to an assembling apparatus and method, and an assembling operation program, and more particularly to a control of an assembling operation using a robot or the like.

### Description of the Background Art

Conventionally, there is executed a method of handling a hand portion of a robot or the like to assemble a component by setting a three-dimensional position of a three-dimensional recognized object component as a target, for example.

Japanese Patent Publication No. 4513663 discloses an automatic assembling system for sequentially assembling a plurality of components by using an assembling mechanism including component holding means. In the automatic assembling system, as a method of teaching an operation of the assembling mechanism, there are disclosed the step of defining a motion in an assembly of each component and the step of determining the operation of the assembling mechanism in such the defined motion of each component can be implemented.

In this case, there is a problem in that a component to be assembled (assembled component) cannot be assembled properly if it is shifted from the defined three-dimensional position and posture.

In order to solve the problem, it is necessary to recognize the three-dimensional position and the posture again, thereby carrying out a correction after disposing the assembled component in an assembling position.

Japanese Patent Application Laid-Open No. 05-108126 (1993) discloses a position correction of an assembled component and an assembling component in an assembling position. A shift of a plurality of measuring reference points which are preset to a workpiece and a component is processed by an image instrumentation and a matrix processing to correct the positions of the assembled component and the assembling component.

However, referring to the method of correcting position described in the Japanese Patent Application Laid-Open No. 05-108326 (1993), for example, it is necessary to measure positions of an assembling component and an assembled component respectively, thereby calculating shifts of measuring reference points from reference positions respectively to correct the positions. Therefore, the processing is complicated.

In a case where the component is a small bolt, moreover, it is hard to set the measuring reference point. Also in a case where the setting is carried out, an interval between the respective measuring reference points is reduced very greatly. For this reason, it is hard to properly carry out correction with sufficient precision in some cases.

### SUMMARY OF THE INVENTION

The present invention is directed to an assembling apparatus related to a control of an assembling operation using a robot or the like.

According to an aspect of the present invention, an assembling apparatus includes a working portion for assembling a first component serving as an assembling component into a second component serving as an assembled component; a recognizing portion for recognizing three-dimensional positions and postures of the first component and the second component; and a control portion for controlling an operation of the working portion based on the recognition of the three-dimensional positions and the postures in the recognizing portion. The control portion controls an operation of the working portion such that a first reference position, which is set to the first component in an actual space recognized by the recognizing portion as a corresponding position to a predetermined first reference point set to three-dimensional model data of the first component, and a second reference position, which is set to the second component in the actual space recognized by the recognizing portion as a corresponding position to a predetermined second reference point set to three-dimensional model data of the second component, with each other, and the second reference point serves to designate a place related to an assembly of the first component over the three-dimensional model data of the second component.

In the three-dimensional model data of the assembled component, the first reference position and the second reference position are set to real first and second components (assembling and assembled components) respectively based on the setting of the first reference point and the second reference point in the respective three-dimensional model data. The second reference point designates a place related to the assembly of the first component in the three-dimensional model data of the second component. By controlling the operation of the working portion such that the first reference position and the second reference position are associated with each other in the actual space, it is possible to efficiently carry out the assembling operation irrespective of the positional shift of the second component (the assembled component).

It is preferable that a dependent reference point which is dependent on the second reference point is further defined in the three-dimensional model data of the second component, and the control portion controls the operation of the working portion so as to cause the first reference position to be coincident with a dependent position corresponding to the dependent reference point and to then cause the first reference position to be coincident with the second reference position.

In the three-dimensional model data of the assembled component, the dependent reference point which is dependent on the second reference point is further defined, and the control portion controls the operation of the working portion so as to cause the first reference position to be coincident with the dependent reference position corresponding to the dependent reference point in an actual component arrangement relationship and to then cause the first reference position and the second reference position to be coincident with each other. Also in the case of a complicated assembling operation with a specific operation such as screwing when the first component is to be assembled into the second reference position, the operation is carried out during a movement from the dependent reference position to the second reference position, thereby enabling the control of the operation of the working portion.

It is preferable that information about the first reference point includes information about an approach angle of the working portion with respect to the first reference point in an execution of an operation for holding the first component through the working portion.

The information about the first reference point includes the information about the approach angle of the working portion with respect to the first reference point in an execution of an operation for holding the assembling component through the working portion. Consequently, the three-dimensional posture of the working portion with respect to the first component is specified. When holding the first component by the working portion, it is possible to regulate the three-dimensional posture of the first component thus held in consideration of a strength of each portion in the first component.

It is preferable that information about the second reference point includes information about an approach angle of the working portion with respect to the second reference point in an execution of an assembling operation of the first component through the working portion.

The information about the second reference point includes the information about the approach angle of the working portion with respect to the second reference point in the execution of the assembling operation of the first component by the working portion. Consequently, the three-dimensional posture of the working portion and the first component with respect to the second component is specified. When assembling the first component by the working portion, it is possible to properly carry out the assembling operation in consideration of a path for preventing a collision with the second component.

Moreover, the present invention is also directed to an assembling method related to a control of an assembling operation using a robot or the like.

According to another aspect of the present invention, an assembling method in an assembling apparatus including a working portion for assembling a first component to be an assembling component into a second component to be an assembled component, includes the steps of: (a) recognizing three-dimensional positions and postures of the first component and the second component; and (b) controlling, based on the recognition of the three-dimensional positions and the postures in the step (a), an operation of the working portion such that a first reference position and a second reference position are associated with each other, the first reference position being set to the first component in an actual space which is recognized as a corresponding position to a predetermined first reference point set to three-dimensional model data of the first component, a second reference position being set to the second component in the actual space which is recognized as a corresponding position to a predetermined second reference point se to three-dimensional model data of the second component. The second reference point serves to designate a place related to an assembly of the first component over the three-dimensional model data of the second component.

In the three-dimensional model data of the assembled component, the first reference position and the second reference position are set to real first and second components (assembling and assembled components) respectively based on the setting of the first reference point and the second reference point in the respective three-dimensional model data. The second reference point designates a place related to the assembly of the first component in the three-dimensional model data of the second component. By controlling the operation of the working portion such that the first reference position and the second reference position are associated with each other in the actual space, it is possible to efficiently carry out the assembling operation irrespective of the positional shift of the second component (the assembled component).

Furthermore, the present invention is also directed to an assembling operation program related to a control of an assembling operation using a robot or the like.

Therefore, it is an object of the present invention to carry out an assembling operation properly and efficiently irrespective of a positional shift of an assembled component.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a diagram conceptually showing a structure of an assembling apparatus;
FIG. 2 is a view showing an example of a hardware structure of the assembling apparatus;
FIG. 3 is a flow chart showing an operation of the assembling apparatus;
FIGS. 4 to 6 are views for explaining the operation of the assembling apparatus;
FIG. 7 is a diagram for explaining a data content of the assembling apparatus;
FIGS. 8 to 11 are views for explaining the operation of the assembling apparatus;
FIG. 12 is a diagram for explaining a data content of the assembling apparatus; and
FIGS. 13 to 20 are views for explaining the operation of the assembling apparatus.

### DESCRIPTION OF THE PREFERRED EMBODIMENTS

### <Preferred Embodiment>

### <Structure>

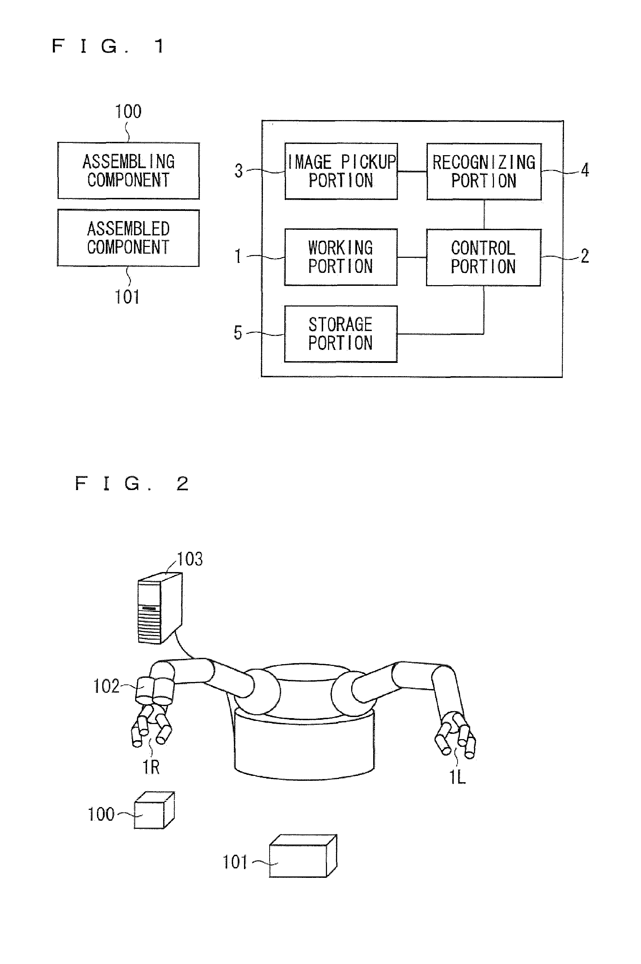

FIG. 1 is a diagram conceptually showing a structure of an assembling apparatus according to the present preferred embodiment. As shown in FIG. 1, the assembling apparatus according to the present invention includes a recognizing portion 4 for recognizing three-dimensional positions and postures of an assembling component 100 and a component 101 to be assembled, a working portion 1 (for example, a robot hand) for assembling the assembling component 100 recognizing the three-dimensional position and the posture into the assembled component 101 recognizing the three-dimensional position and the posture, and a control portion 2 for controlling an operation of the working portion 1.

The assembling component 100 (a first component) and the assembled component 101 (a second component) are not always restricted to correspond to single components.

In a case where a parallax image is used to recognize the three-dimensional positions and the postures of the assembling component 100 and the assembled component 101, moreover, it is also possible to include an image pickup portion 3 for offering a parallax image to the recognizing portion 4 as shown in FIG. 1.

For example, in a case where the image pickup portion 3 such as a stereo camera is provided, it is possible to carry out ICP (Iterative Closest Point) matching with three-dimensional model data of the assembling component 100 or the assembled component 101 which is prepared in advance, thereby recognizing the three-dimensional position and the posture of the assembling component 100 or the assembled component 101 in the recognizing portion 4 by using the parallax image of the assembling component 100 or the assembled component 101 which is picked up by the image pickup portion 3.

The three-dimensional model data are point group data disposed to form a known shape of a target component and having three-dimensional position information respectively, and are constituted by a point group corresponding to each side, each apex or the like of a target. For example, the three-dimensional data is described in a format of a three-dimensional CAD (Computer Aided Design). The target component does not need to be a single component but a plurality of components may be combined. Three-dimensional model data on the single component are particularly set to be three-dimensional single graphic data and three-dimensional model data on a combination of the components are particularly set to be three-dimensional combined graphic data.

The image pickup portion 3 can also be attached to the working portion 1. More specifically, in a case where the working portion 1 is the robot hand, it is attached to a base part of the robot hand (see Fig. 2 which will be described below) so that the assembling component 100 or the assembled component 101 can be grasped from a close visual point to recognize the three-dimensional position and the posture with higher precision.

Also in a case where the image pickup portion 3 is not provided, it is sufficient that the three-dimensional position and the posture of the assembling component 100 or the assembled component 101 can be measured by means of a sensor or the like and a result of the measurement may be given from an outside or the like to the recognizing portion 4.

Moreover, the assembling apparatus can further include a storage portion 5 for storing the three-dimensional model data of the assembling component 100 and the assembled component 101 which are prepared in advance or the like. However, a storage apparatus for functioning as the storage portion 5 may be provided on the outside of the apparatus and may have a manner for carrying out a communication with the storage apparatus or the like to acquire data.

Fig. 2 shows an example of a hardware structure of the assembling apparatus according to the present preferred embodiment.

As shown in Fig. 2, the assembling apparatus includes a robot hand 1R and a robot hand 1L (which correspond to the working portion 1) for holding the assembling component 100 and the assembled component 101, a camera 102 (corresponding to the image pickup portion 3) attached to the robot hand 1R in order to recognize the three-dimensional positions and the postures of the assembling component 100 and the assembled component 101, and a CPU 103 (corresponding to the recognizing portion 4, the control portion 2 and the storage portion 5) for controlling the operation of the robot hand 1R and the robot hand 1L.

Although the double-arm robot is shown as the assembling apparatus in FIG. 2, it is also possible to employ a robot having a single arm of the robot hand 1R, for example. Moreover, the shapes of the assembling component 100 and the assembled component 101 are not limited to the shapes shown in the drawing.

### <Operation>

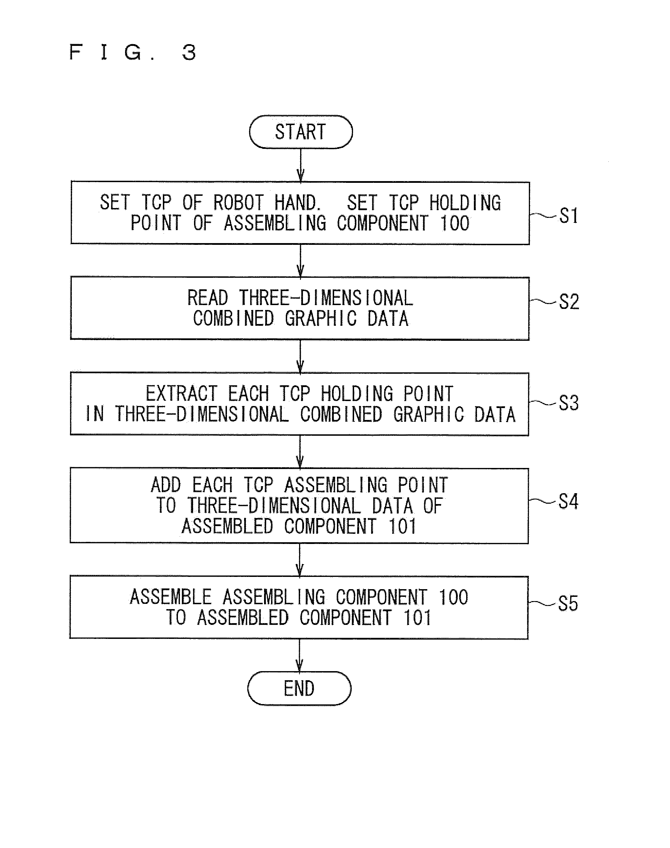

Next, the operation of the assembling apparatus according to the present preferred embodiment will be described with reference to a flow chart of Fig. 3.

"a first reference point", "a second reference point" and "a dependent reference point" in position elements appearing in the following description are position information set onto three-dimensional CAD data. On the other hand, "a first reference position", "a second reference position" and "a dependent reference position" are position information obtained by converting the positions of the "first reference point", the "second reference point" and the "dependent reference point" into a coordinate system (for example, a robot coordinate system) in a space where an actual component is present. Moreover, the "third reference position" is position information on the robot side (the robot coordinate system), that is, position information defined irrespective of a situation in which a component is disposed.

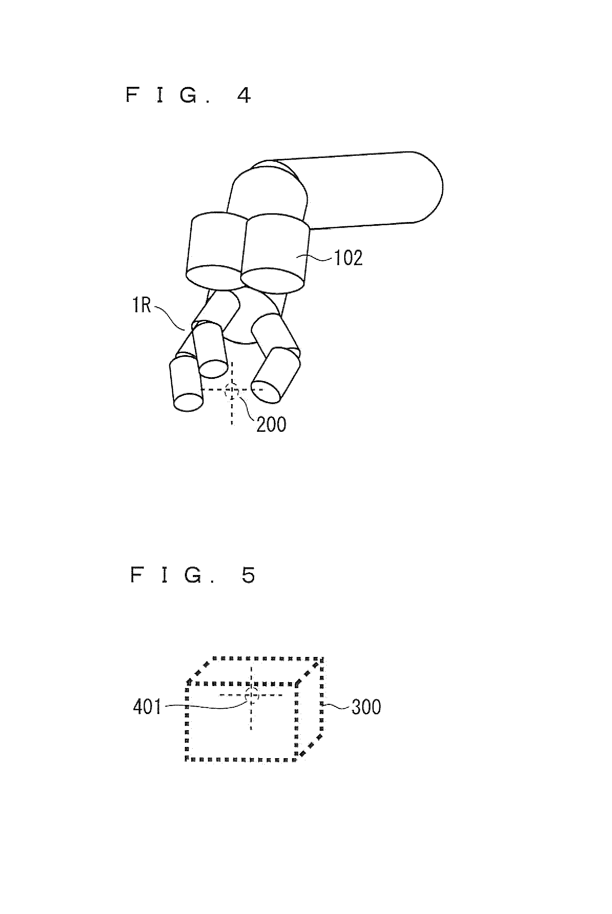

In Step S1, a point for holding a component through the robot hand 1R or the like is set to be a TCP 200 (Tool Center Point: tool center point) (see FIG. 4). The TCP 200 (the third reference position) is a three-dimensional position (x, y, z) in the robot hand 1R which is a reference for holding the assembling component 100 or the assembled component 101 by the robot hand 1R serving as the working portion 1. This position does not need to be always a central position between fingers shown in FIG. 4 but may be a position which is convenient for holding the component by using the robot hand 1R. The TCP 200 can be set individually every robot hand 1R into local three-dimensional coordinates of the robot.

In the Step S1, moreover, a TCP holding point 401 (the first reference point) is set in three-dimensional model data 300 of the assembling component 100 (see FIG. 5). The TCP holding point 401 is the reference point in the three-dimensional model data 300 of the assembling component 100 which corresponds to the TCP 200 set to the robot hand 1R. By causing the three-dimensional positions of the TCP 200 of the robot hand 1 R and the TCP holding position 201 to be a point of an actual space corresponding to the TCP holding point 401 to be coincident with each other, for example, it is possible to specify a three-dimensional position and a posture for properly holding the assembling component 100 by the robot hand 1R. More specifically, it is possible to properly hold the assembling component 100 by holding a finger of the robot hand 1R onto the assembling component 100 in a state in which the TCP 200 of the robot hand 1R is coincident with the TCP holing position 201 of the assembling component 100.

This position does not need to be always a central position of the assembling position 100 as shown in FIG. 5 but it is sufficient that the position is convenient for holding the assembling component 100 by using the robot hand 1R. The TCP holding point 401 can be set into the local three-dimensional coordinate of the assembling component 100 individually every three-dimensional model data 300 of the assembling component 100, respectively.

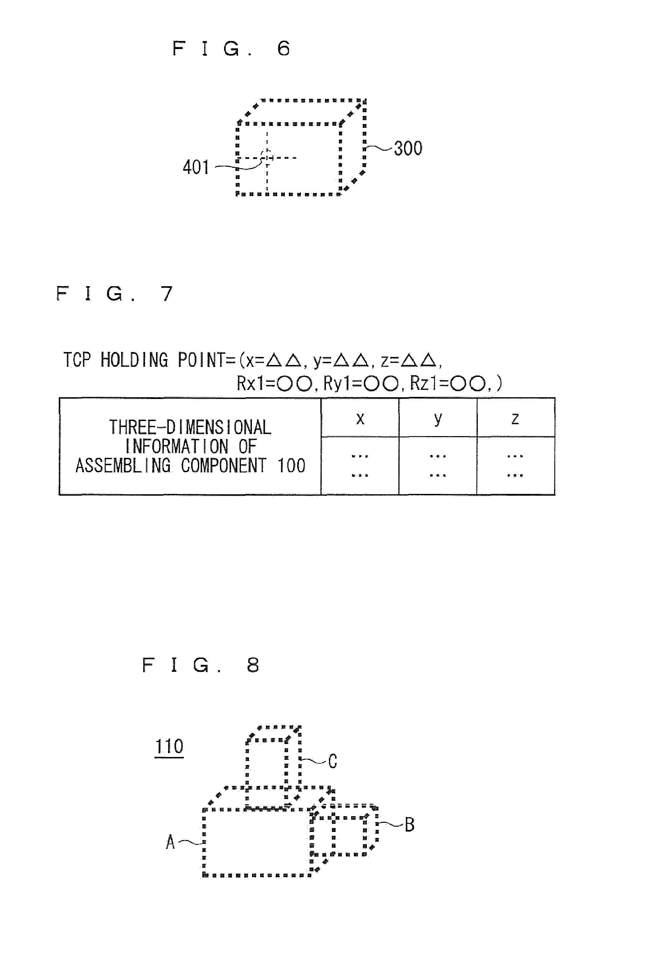

In the three-dimensional model data 300 of the assembling component 100, it is also possible to store the TCP holding point 401 in a plurality of patterns, thereby setting one of them depending on a situation before an actual working start (see FIGS. 5 and 6). The reason is that the same assembling component 100 is to be held in a different position by the robot hand 1R depending on a difference in an assembling method. Furthermore, a change is made due to the shape of the robot hand 1R or the like. Therefore, one of TCP holding point candidates determined and stored in advance may be set as the TCP holding point 401 corresponding to each robot hand 1R.

The TCP holding point 401 can include information about a three-dimensional holding approach angle (Rx1, Ry1, Rz1) in addition to a three-dimensional position (x, y, z) thereof. The information about the three-dimensional holding approach angle (Rx, Ry1, Rz1) is to be taken for the robot hand 1R to approach the TCP holding point 401 when holding the assembling component 100 by means of the robot hand 1R.

By a separate method from the other methods, the information about the set TCP holding point 401 can be described in data in which the three-dimensional model data 300 (the point group data) of the assembling component 100 are described, for example (see FIG. 7).

Although the TCP holding point 401 is set in the three-dimensional single graphic data of each component in the above description, the TCP holding point 401 may be set onto the three-dimensional combined graphic data so as to be the TCP holding point 401 of each component. By preventing components other than a component for setting the TCP holding point 401 from being displayed at this time, it is possible to set the TCP holding point 401 in the same manner as in a case where the TCP holding point 401 is set in the three-dimensional single graphic data.

In Step S2, the three-dimensional combined graphic data of the assembling component 100 and the assembled component 101 are read from the data stored in the storage portion 5 (see FIG. 8).

The three-dimensional combined graphic data are disposed in a state in which the three-dimensional single graphic data of each of the assembling component 100 and the assembled component 101 are assembled (an assembling target 110), and the three-dimensional model data 300 (the point group data) defined by the local coordinates of each of the assembling component 100 and the assembled component 101 are defined in a unified coordinate system. The assembled state (the assembling target 110) also includes a state of a middle stage till a completion of an assembly (a state in which at least one of a component A, a component B and a component C lacks).

A point group in the three-dimensional single graphic data of each component is disposed in an assembling state so that a relative positional relationship among the components in the assembling target 110 (among the components A, B and C in FIG. 8) is described.

The three-dimensional combined graphic data may be substituted by creating the combined drawing from the three-dimensional single graphic data of each component in three-dimensional CAD software to bring an executable state.

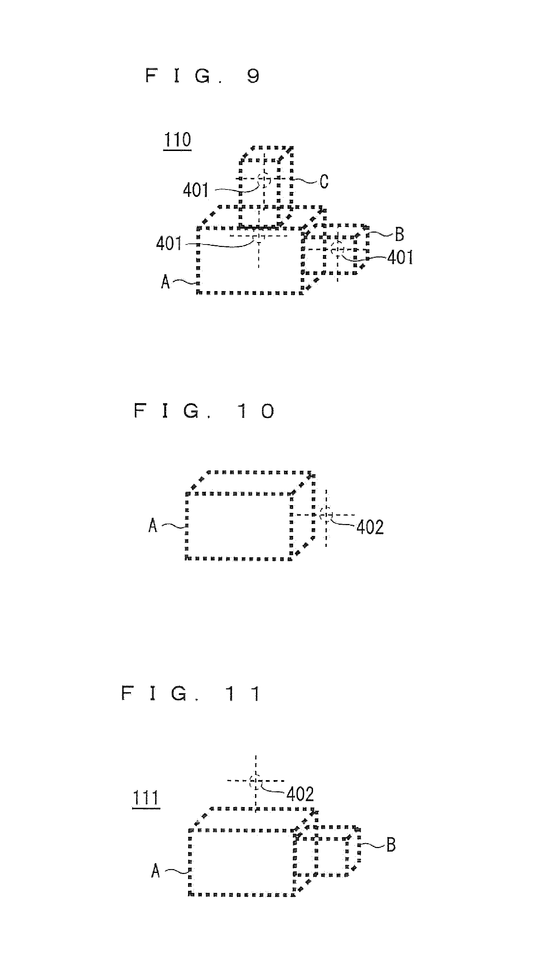

In Step S3, the TCP holding point 401 of each assembling component 100 is extracted over the three-dimensional combined graphic data. In FIG. 9, the TCP holding point 401 set in the three-dimensional single graphic data of each of the components A, B and C is extracted in a coordinate system in which the three-dimensional combined graphic data are defined. In a case where the TCP holding point 401 is set over the three-dimensional combined graphic data, the TCP holding point 401 is extracted. In a case where the component A is the assembled component 101, the TCP holding point 401 does not need to be extracted. By the extracting operation, it is possible to set the relative positional relationship of the TCP holding point 401 in the three-dimensional model data of each component (see FIG. 9).

In Step S4, each TCP holding point 401 thus extracted is added as a TCP assembling point 402 (a second reference point) to the three-dimensional model data of the assembled component 101 at a time that the assembling component 100 is assembled, for example. The assembled component 101 includes an assembling target in a middle stage in which a plurality of components has already been assembled. Moreover, the "assembling point" serves to designate a place related to the assembly of an assembling component (a first component) in an assembled component (a second component), and typically indicates a place (an attaching place) in which the assembling component is assembled into the assembled component.

More specifically, in a case where there is the assembling target 110 which is assembled by assembling the components A, B and C in this order, the TCP holding point 401 of the component B extracted in the three-dimensional combined graphic data of the assembling target 110 is added as the TCP assembling point 402 to the three-dimensional single graphic data of the component A to be the assembled component 101 at a time that the component B is assembled (see FIG. 10). In the addition, reference is made to the relative positional relationship between the TCP holding point 401 of the component B defined in the three-dimensional combined graphic data of the assembling target 110 and the component A (more specifically, the relative positional relationship is maintained) and the same relative positional relationship is thus described in the coordinate system over the three-dimensional single graphic data of the component A.

Moreover, the TCP holding point 401 of the component C is added as the TCP assembling point 402 to the three-dimensional combined graphic data of an assembling target 111 of the components A and B to be the assembled component 101 at a time that the component C is assembled (see FIG. 11). In the addition, reference is made to the relative positional relationship between the TCP holding point 401 of the component C defined in the three-dimensional combined graphic data of the assembling target 110 and the assembling target 111 (more specifically, the relative positional relationship is maintained) and the same relative positional relationship is thus described in the coordinate system over the three-dimensional combined graphic data of the assembling target 111.

The assembled component 101 of the three-dimensional model data to which the TCP assembling point 402 is added is not restricted to be the assembled component 101 at a time that the assembling component 100 is to be assembled but may be the assembled component 101 in a previous stage to that time. If the assembled component 101 is added to the three-dimensional model data of the assembled component 101 at the time that the assembling component 100 is assembled however, it is easily to lead the relative positional relationship with the assembled component 101 which is recognized by the recognizing portion 4 in the assembly, which is efficient.

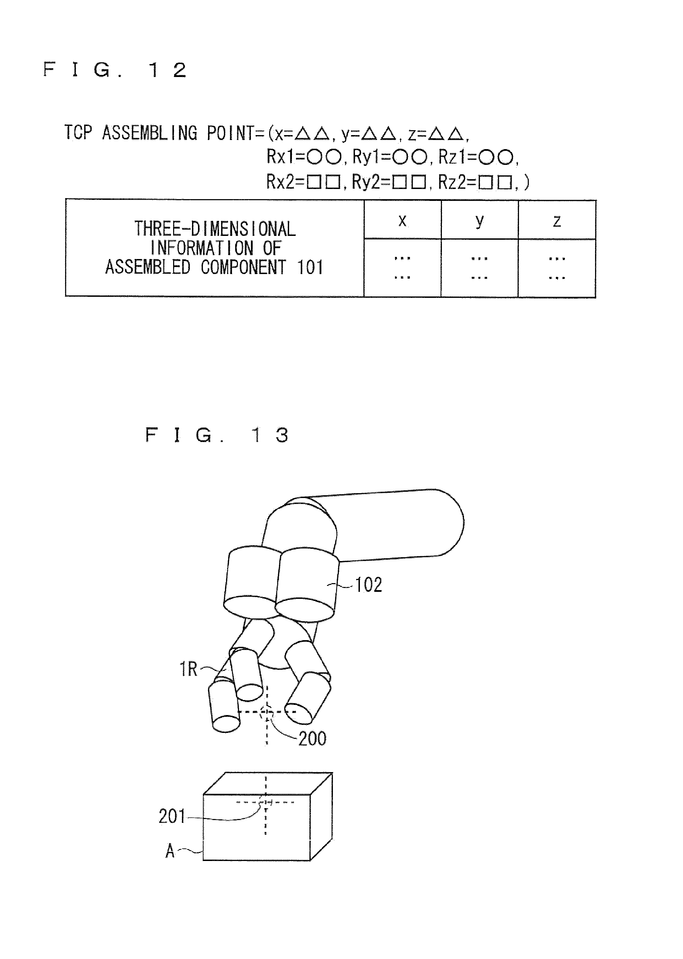

The addition of the TCP assembling point 402 to the three-dimensional model data of the assembled component 101 implies that it is described, by a separate method from the other methods, in the data in which the three-dimensional model data of the assembled component 101 are described as shown in FIG. 12, for example.

In the addition of the TCP assembling point 402 to the three-dimensional model data of the assembled component 101, information about the three-dimensional position (x, y, z) and information about a holding approach angle (Rx1, Ry1, Rz1) in the TCP holding point 401 can be taken over in the coordinate system of the three-dimensional model data in the assembled component 101, and furthermore, information about an assembling approach angle (Rx2, Ry2, Rz2) to be taken in an approach of the assembling component 100 into the position can further be added. In place of the information about the holding approach angle (Rx1, Ry1, Rz1), it is also possible to add the information about the assembling approach angle (Rx2, Ry2, Rz2).

The three-dimensional single graphic data of the assembled component 101 to which the information about the TCP assembling point 402 is added as shown in FIG. 10 have the information about the TCP holding point 401 of the assembling component 100 in addition to the three-dimensional position information of the assembled component 101. In FIG. 10, the information (the TCP assembling point 402) about the TCP holding point 401 of the component B is added to the three-dimensional single graphic data of the component A. Although the TCP assembling point 402 shown in FIG. 10 is defined in the three-dimensional position of the component A, it may be defined in the component A depending on an assembling method.

Also in a case where the assembled component 101 of the three-dimensional model data to which the information about the TCP assembling point 402 as shown in FIG. 11 has already been assembled by a plurality of components (the components A and B), the three-dimensional combined graphic data have the information about the TCP holding point 401 of the assembling component 100 in addition to the three-dimensional position information of the assembled component 101. In FIG. 11, the information (the TCP assembling point 402) about the TCP holding point 401 of the component C is added to the three-dimensional combined graphic data of the assembling target 111 constituted by the components A and B.

The three-dimensional model data to which the TCP assembling point 402 is added can be stored properly in the storage portion 5.

By thus specifying the assembled component 101 every operating step and adding the TCP assembling point 402 of the assembling component 100 to the three-dimensional model data, it is possible to specify the TCP assembling point 402 of the assembling component 100 to be assembled on the three-dimensional model data of the assembled component 101 for recognizing the three-dimensional position and the posture in the assembling operation. Accordingly, it is possible to efficiently carry out the assembling operation.

In a case where the components B and C are assembled at the same time, for example, it is also possible to add the TCP assembling point 402 of the component B and the TCP assembling point 402 of the component C onto the three-dimensional single graphic data of the component A. Also in a case where the components B are assembled to the component A at the same time, it is possible to add the TCP assembling points 402 of the component B onto the three-dimensional single graphic data of the component A.

Although FIGS. 10 and 11 show the case in which the components A, B and C are sequentially assembled, the processing can be carried out in the same manner also when the single assembling component 100 (the component B) is to be assembled to the single assembled component 101 (the component A). In other words, it is sufficient that the TCP assembling point 402 of the component B to be assembled subsequently is added onto the three-dimensional single graphic data of the component A.

In step S5, the assembling component 100 is actually assembled into the assembled component 101. The assembling operation is carried out by causing the control portion 2 to control the operation of the working portion 1. First of all, the operation is controlled in such a manner that the TCP 200 of the robot hand 1R to be the working portion 1 is coincident with the TCP holding position 201 to be a point of an actual space which corresponds to the TCP holding point 401 in the assembling component 100 based on the recognition of a three-dimensional position and a posture which will be descried below. At this time, the three-dimensional position and the posture of the robot hand 1R are defined in consideration of the holding approach angle.

Next, the assembling component 100 is held by the robot hand 1R in the three-dimensional position and the posture in which the TCP 200 is coincident with the TCP holding position 201 to be the point of the actual space corresponding to the TCP holding point 401, and furthermore, the operation is controlled in such a manner that the TCP 200 of the robot hand 1R is coincident with the TCP assembling position 202 in the assembled component 101. In other words, the operation is controlled in such a manner that the TCP holding position 201 in the assembling component 100 is coincident with the TCP assembling position 202 in the assembled component 101.

Thus, the assembling operation is implemented.

By taking, as an example, an operation to be carried out in a case where the components A, B and C are used to assemble the assembling target 110, specific description will be given.

First of all, the three-dimensional position and the posture of the component A placed in an initial position are recognized by the recognizing portion 4 and the holding operation of the robot hand 1R is carried out by the control portion 2 (see FIG. 13).

At this time, in order to recognize the three-dimensional position and the posture, it is possible to use a parallax image of the component A acquired by the image pickup portion 3 (the camera 102 attached to the robot hand 1R). By using the point group data of the component A having the three-dimensional position information respectively which can be created from the parallax image through a stereo method to carry out ICP matching with the three-dimensional single graphic data of the component A which are prepared in advance, it is possible to recognize the three-dimensional position and the posture of the component A.

In points having the same names, any of the points which is expressed in a coordinate system defined on the CAD data will be exactly referred to as a "point" and any of the points in the coordinate system in the actual arrangement space of each component (a coordinate system of the actual space, more specifically, a robot coordinate system or the like) will be referred to as a "position". Thus, they are mutually distinguished. For example, the "preference point" or the "holding point" is defined on the CAD data, and the "reference position" or the "holding position" is defined in the actual space.

Retuning to the description of the operation, when the three-dimensional position and the posture in the actual space of the component A are recognized, the TCP holding point 401 (the first reference point) in the three-dimensional single graphic data of the component A is coordinate transformed into the coordinate system in the actual space to specify the TCP holding position 201 (the first reference position) in the component A.

When the TCP holding position 201 is specified, the operation of the robot hand 1R is controlled in such a manner that the TCP 200 of the robot hand 1R is coincident with the TCP holding position 201. At this time, an angle at which the robot hand 1R approaches the TCP holding position 201 is determined three-dimensionally based on information about the holding approach angle which is included in the information of the TCP holding point 401. In a three-dimensional position and a posture in which the respective three-dimensional positions of the TCP holding position 201 of the component A and the TCP 200 of the robot hand 1R are coincident with each other and the holding approach angle of the TCP holding position 201 of the component A and the posture of the robot hand 1R are coincident with each other, the component A is held by fingers of the robot hand 1R. The TCP holding position 201 of the component A which is held is maintained into a coincident state with the TCP 200 of the robot hand 1R.

Next, the robot hand 1R holding the component A is moved to put the component A in a proper working position. In consideration of easiness of working or the like, the working position is preset. In a case where the component A is previously disposed in a workable position, it is sufficient that the operation is simply omitted to recognize the three-dimensional position and the posture without holding the component A.

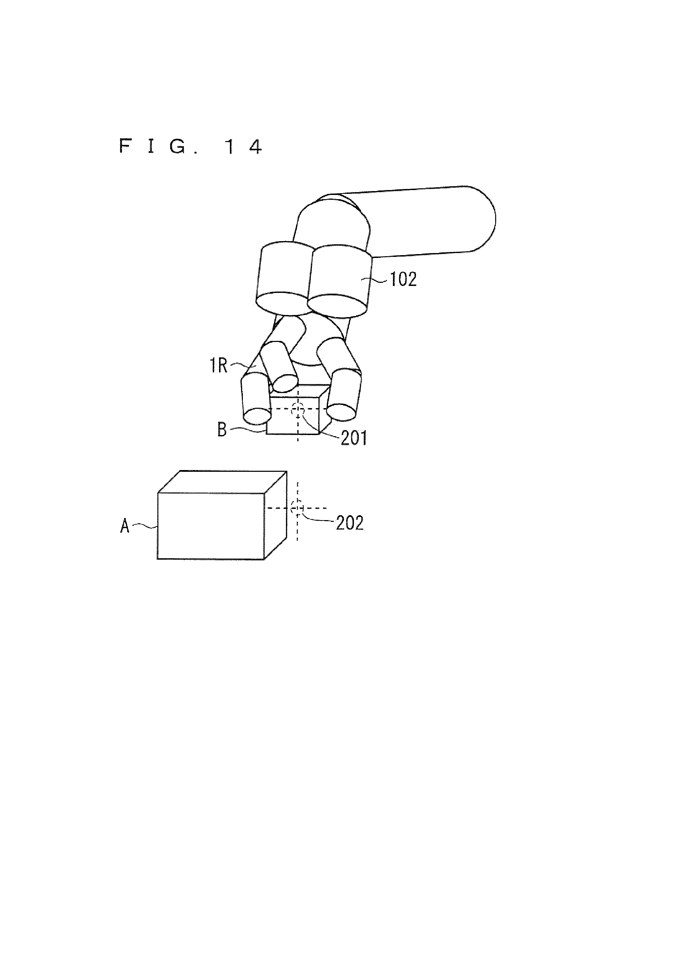

Then, the three-dimensional position and the posture of the component B (the assembling component 100) to be thereafter assembled to the component A (the assembled component 101) are recognized by the recognizing portion 4 and the operation of the robot hand 1R is controlled by the control portion 2 to hold the component B. The operation can be carried out in the same manner as in a case where the component A is held (see FIG. 14).

Subsequently, the three-dimensional position and the posture of the component A put in the working position are recognized again and reference is made to the information about the TCP assembling point 402 of the component B which is added to the three-dimensional single graphic data of the component A (see FIG. 14). Then, the TCP assembling point 402 of the component B is converted into position information in the actual space (more specifically, a coordinate transformation) to obtain the TCP assembling position 202. In a case where the three-dimensional position and the posture of the component A put in the working position can be grasped, it is not necessary to carry out the recognition again.

Next, the operation of the robot hand 1R is controlled by the control portion 2 in such a manner that the TCP 200 of the robot hand 1R is caused to be coincident with the TCP assembling position 202 in the actual space obtained from the TCP assembling point 402 of the component B added to the three-dimensional single graphic data of the component A, that is, the TCP holding position 201 of the component B is caused to be coincident with the TCP assembling position 202 of the component B.

The operation control is carried out by specifying the three-dimensional position of the TCP assembling position 202 of the component B with respect to the three-dimensional position and the posture of the component A recognized in the robot coordinate system based on the relative positional relationship between the TCP assembling point 402 of the component B and the component A in the coordinate system of the three-dimensional single graphic data of the component A to be the assembled component 101.

At this time, an angle at which the robot hand 1R approaches the TCP assembling position 202 is three-dimensionally determined based on the information about an assembling approach angle which is included in the TCP assembling point 402. In a position in which the TCP assembling position 202 of the component B is coincident with the TCP 200 of the robot hand 1R, the finger of the robot hand 1R is removed from the component B. By the operation, an operation for assembling the component B (the assembling component 100) into the component A (the assembled component 101) is completed.

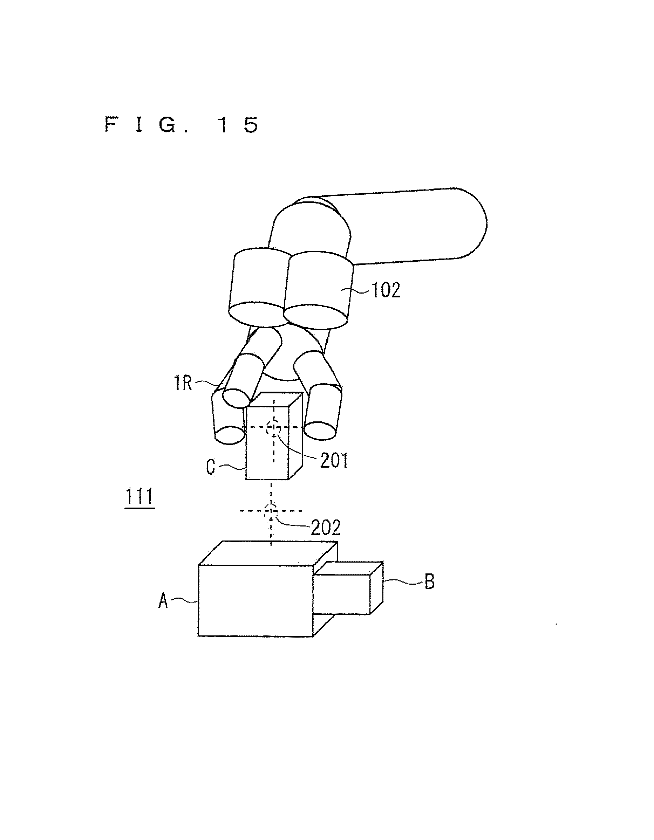

Next, the three-dimensional position and the posture of the component C to be subsequently assembled into the assembling target 111 (the assembled component 101) of the components A and B are recognized by the recognizing portion 4, and the operation of the robot hand 1R is controlled by the control portion 2 to hold the component C. The operation can be carried out in the same manner as in the case where the components A and B are held (see FIG. 15).

Then, the three-dimensional position and the posture of the assembling target 111 are recognized again to refer to the TCP assembling point 402 of the component C which is added to the three-dimensional combined graphic data of the assembling target 111 (see FIG. 15). In a case where the three-dimensional position and the posture of the assembling target 111 can be grasped, it is not necessary to carry out the recognition again.

Then, the operation of the robot hand 1R is controlled in such a manner that the TCP 200 of the robot hand 1R is caused to be coincident with the TCP assembling position 202 obtained by the coordinate transformation of the TCP assembling point 402 of the component C which is added to the three-dimensional combined graphic data of the assembling target 111, that is, the TCP holding position 201 of the component C is caused to be coincident with the TCP assembling position 202 of the component C.

The operation control is carried out by converting a relative relationship in the CAD coordinate system into a relative relationship in the coordinate system of the actual space (the robot coordinate system or the like) in relation to a relative relationship which is concerned with the three-dimensional positions and the postures of the assembling target 111 (the assembled component 101) and the TCP assembling point 402 of the component C.

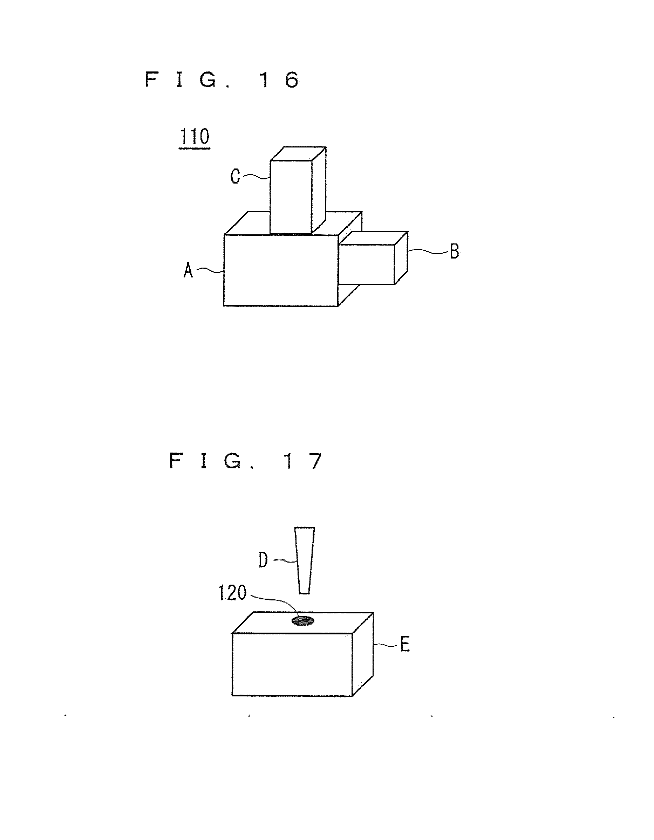

At this time, the angle at which the robot hand 1R approaches the TCP assembling position 202 is three-dimensionally determined based on the information about the assembling approach angle which is included in the TCP assembling point 402. The finger of the robot hand 1R is removed from the component C in a positional relationship in which the TCP assembling position 202 of the component C is coincident with the TCP 200 of the robot hand 1R. By the operation, the operation for assembling the component C (the assembling component 100) into the assembling target 111 (the assembled component 101) is completed so that the assembling target 110 is finished (see FIG. 16).

### <Modified Example>

In a case where a specific operation added to the assembling operation is required when the assembling component 100 is to be assembled, it is possible to include information about the specific operation instruction in the three-dimensional model data of the assembled component 101 in the following manner, for example.

For example, description will be given to the case where the assembling component 100 is a screw or a bolt (see FIG. 17).

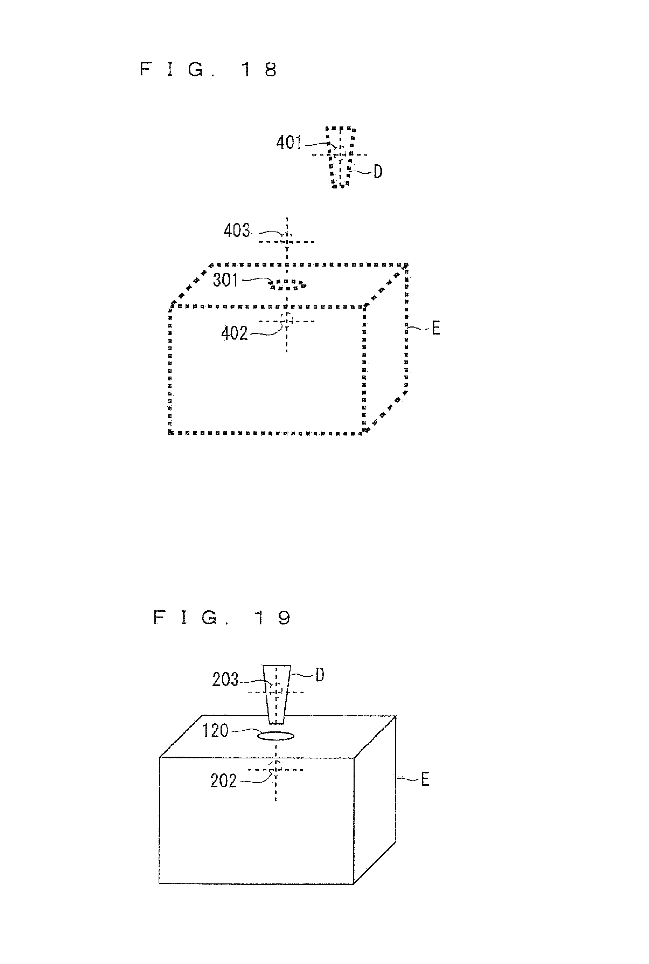

In a case where a component D (screw) is assembled into a component E (a member including a screw hole) (see FIG. 17), it is possible to add information about a dependent assembling point 403 in addition to the TCP assembling point 402 of the component D over the three-dimensional graphic data of the component E (see FIG. 18).

The dependent assembling point 403 (the dependent reference point) indicates a three-dimensional position which is passed before finally arriving at the TCP assembling point 402 of the component D. The information about the dependent assembling point 403 includes information about an assembling approach angle in the dependent assembling point 403, and furthermore, information for designating an operation to be carried out by the assembling component 100 (a specific axial rotating operation or the like) during a movement of the assembling component 100 (the component D) from the dependent assembling point 403 to the TCP assembling point 402 in addition to information about the three-dimensional position.

The dependent assembling point 403 is defined in the three-dimensional position in which a specific operation is to be started in consideration of a size (a length) of the component D or the like. A plurality of dependent assembling points 403 may be provided.

The three-dimensional position and the posture of the component D (the assembling component 100) to be assembled into the component E (the assembled component 101) are recognized by the recognizing portion 4 and the operation of the robot hand 1R is controlled by the control portion 2 to hold the component D. The operation can be carried out in the same manner as in the case described in the first preferred embodiment.

Next, reference is made to the TCP assembling point 402 of the component D and the dependent assembling point 403 of the component D which are added to the three-dimensional single graphic data of the component E (see FIG. 18). The three-dimensional position of the TCP assembling point 402 of the component D and the three-dimensional position of the dependent assembling point 403 are converted into the TCP assembling position 202 and the dependent assembling position 203 in the actual space.

Subsequently, the operation of the robot hand 1R is controlled in such a manner that the TCP 200 of the robot hand 1R is caused to be coincident with the dependent assembling position 203 of the component D, that is, the TCP holding position 201 of the component D is caused to be coincident with the dependent assembling position 203 of the component D (see FIG. 19). At this time, an angle at which the robot hand 1R approaches the dependent assembling position 203 is three-dimensionally determined based on the information about the assembling approach angle which is included in the dependent assembling point 403.

In a position in which the dependent assembling position 203 of the component D is coincident with the TCP 200 of the robot hand 1R, reference is made to an instruction for an operation to be carried out by the component D during a movement of the component D from the dependent assembling position 203 to the TCP assembling position 202. In this example, it is assumed that a rotating operation for causing a major axis of the component D to be a rotating axis is designated.

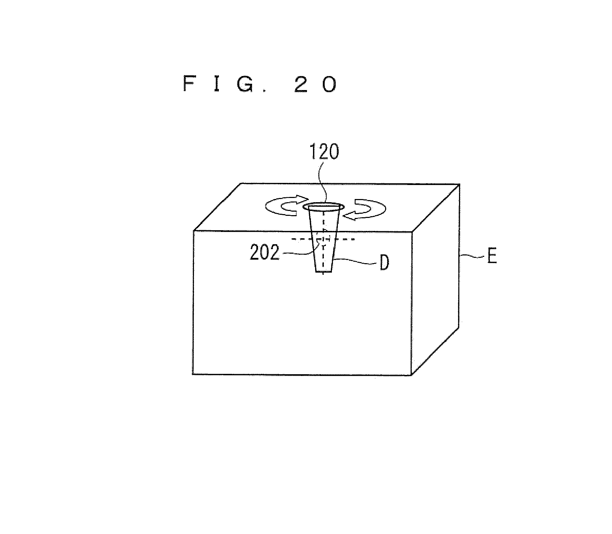

The robot hand 1R carries out the rotating operation while holding the component D in accordance with the operation instruction, and the control portion 2 controls the operation of the robot hand 1R in such a manner that the TCP 200 of the robot hand 1R is caused to be coincident with the TCP assembling position 202 obtained from the TCP assembling point 402 of the component D added to the three-dimensional single graphic data of the component E, that is, the TCP holding position 201 of the component D is caused to be coincident with the TCP assembling position 202 of the component D. At this time, the angle at which the robot hand 1R approaches the TCP assembling position 202 is three-dimensionally determined based on the information about the assembling approach angle which is included in the TCP assembling point 402 of the component D. Thus, the component D is screwed into a hole 120 formed on a surface of the component E (see FIG. 20).

By the operation, an operation for assembling the component D (the assembling component 100) into the component E (the assembled component 101) is completed.

### <Effect>

According to the preferred embodiment of the present invention, based on the TCP holding point 401 to be the first reference point of the assembling component 100 which is defined in the three-dimensional model data of the assembling component 100 and the TCP assembling point 402 to be the second reference point of the assembling component 100 which is defined in the three-dimensional model data of the assembled component 10 1, the control portion 2 specifies the first reference position and the second reference position which correspond thereto for each component that is recognized. Then, the control portion 2 controls the operation of the working portion 1 in order to associate the first reference position and the second reference position with each other. Consequently, it is possible to easily and accurately specify the assembling position of the assembling component 100 into the assembled component 101, thereby carrying out the assembling operation efficiently irrespective of the positional shift of the assembled component 101.

Also in a case where the assembling component 100 is small, moreover, it is not necessary to take into consideration a shift from an original position where the assembling component 100 is to be disposed. Thus, it is possible to carry out the assembling operation with proper precision.

In the actual assembling operation in which a shift is easily caused over the three-dimensional positions and the postures of the assembled component 101 and the assembling component 100, it is possible to implement a more practical assembling operation.

According to the present preferred embodiment of the present invention, in the assembling apparatus, the TCP assembling point 402 to be the second reference point is preset in the three-dimensional combined graphic data of the assembled component 101 and the assembling component 100. The three-dimensional combined graphic data indicate the state in which the assembling component 100 is assembled into the assembled component 101. Based on the information about the TCP assembling point 402 in the three-dimensional combined graphic data and the result of the recognition in the actual space, the TCP assembling portion 202 in the actual space is set and the operation of the robot hand 1R to be the working portion 1 can be controlled properly by setting the TCP assembling position 202 as a target.

According to the preferred embodiment of the present invention, in the assembling apparatus, the dependent assembling point 403 to be the dependent reference point which is dependent on the TCP assembling point 402 to be the second reference point is further defined and the dependent reference position corresponding thereto in the actual space is specified in the three-dimensional model data of the assembled component 101. The control portion 2 controls the operation of the working portion 1 so as to cause the TCP holding position 201 to be the first reference position and the dependent assembling position 203 to be coincident with each other and to then cause the TCP holding position 201 and the TCP assembling position 202 to be coincident with each other. Also in the case of a complicated assembling operation with a specific operation such as screwing when the assembling component 100 is to be assembled into the TCP assembling position 202, the operation is carried out during the movement from the dependent assembling position 203 to the TCP assembling position 202 so that the operation of the robot hand 1R can be controlled.

By properly disposing the three-dimensional position of the dependent assembling point 403, moreover, it is possible to regulate a distance and a time that the assembling component 100 is caused to carry out the specific operation. Thus, it is possible to control the operation more properly.

According to the preferred embodiment of the present invention, in the assembling apparatus, the information about the TCP holding point 401 to be the first reference point includes the information about the approach angle of the working portion 1 with respect to the TCP holding point 401 in the execution of the holding operation of the assembling component 100 by the working portion 1. Consequently, the three-dimensional posture of the robot hand 1R with respect to the assembling component 100 is specified. When holding the assembling component 100 by the robot hand 1R, it is possible to regulate the three-dimensional posture of the assembling component 100 thus held in consideration of a strength of each portion in the assembling component 100.

According to the preferred embodiment of the present invention, in the assembling apparatus, the information about the TCP assembling point 402 to be the second reference point includes the information about the approach angle of the working portion 1 with respect to the TCP holding point 402 in the execution of the assembling operation of the assembling component 100 by the working portion 1. Consequently, the three-dimensional posture of the robot hand 1R and the assembling component 100 with respect to the assembled component 101 is specified. When assembling the assembling component 100 by the robot hand 1R, it is possible to properly carry out the assembling operation in consideration of a path for preventing a collision with the assembled component 101.

According to the preferred embodiment of the present invention, in the assembling apparatus, the TCP holding points 401 to be the first reference points are determined and stored every assembling component 100 and are set to the respective assembling components. By the method of assembling the assembling component 100, consequently, it is possible to set a method of holding different patterns.

According to the preferred embodiment of the present invention, in the assembling apparatus, the TCP assembling points 402 to be the second reference points are set every assembled component 101. Consequently, they are compatible with the case in which a plurality of assembling components is assembled by using a plurality of robot arms, for example. Thus, it is also possible to be compatible with a complicate assembling operation.

Depending on the shapes or materials of the assembling component or the assembled component, a holding mechanism for holding each component through a robot hand may be an engaging mechanism or a vacuum adsorbing mechanism in place of the holding mechanism described in the preferred embodiment.

In the present invention, moreover, an optional component in the present preferred embodiment can be changed or omitted without departing from the scope of the present invention.

The present invention can be used for a work for assembling a composite part or apparatus using a robot.

While the invention has been shown and described in detail, the foregoing description is in all aspects illustrative and not restrictive. It is therefore understood that numerous modifications and variations can be devised without departing from the scope of the invention.

## Claims

1. An assembling apparatus comprising:
a working portion (1) for assembling a first component serving as an assembling component (100) into a second component serving as an assembled component (101);
a recognizing portion (4) for recognizing three-dimensional positions and postures of said first component and said second component; and
a control portion (2) for controlling an operation of said working portion (1) based on the recognition of the three-dimensional positions and the postures in said recognizing portion (4), wherein
said control portion (2) controlling an operation of said working portion (1) such that a first reference position (201) and a second reference position (202) are associated with each other, said first reference position (201) being set to said first component in an actual space recognized by said recognizing portion (4) as a corresponding position to a predetermined first reference point (401) set to three-dimensional model data of said first component, said second reference position (202) being set to said second component in the actual space recognized by said recognizing portion (4) as a corresponding position to a predetermined second reference point (402) set to three-dimensional model data of said second component, and
said second reference point (402) serves to designate a place related to an assembly of said first component over the three-dimensional model data of said second component.

2. The assembling apparatus according to claim 1, wherein said first reference point (401) serves as a reference when said working portion (1) holds said first component.

3. The assembling apparatus according to claim 1 or 2, wherein said second reference point (402) serves to correspond to a relative positional relationship between said second component and said first reference point (401) in three-dimensional combined graphic data of said second component and said first component which indicates a state in which said first component is assembled into said second component.

4. The assembling apparatus according to any one of claims 1 to 3, wherein said control portion (2) controls an operation of said working portion (1) so as to cause said reference position (201) to be coincident with said second reference position (202).

5. The assembling apparatus according to any one of claims 1 to 4, wherein said working portion (1) has a third reference position (200) for holding said first component, and
said control portion (2) controls an operation for holding said first component through said working portion (1) so as to cause said first reference position (201) and said third reference position (202) to be coincident with each other, and
controls the operation of said working portion (1) so as to cause said first reference position (1) of said first component to be coincident with said second reference position (202) of said second component.

6. The assembling apparatus according to any one of claims 1 to 5, wherein a dependent reference point (403) which is dependent on said second reference point (402) is further defined in the three-dimensional model data of said second component, and
said control portion (2) controls the operation of said working portion (1) so as to cause said first reference position (201) to be coincident with a dependent position (203) corresponding to said dependent reference point (403) and to then cause said first reference position (201) to be coincident with said second reference position (202).

7. The assembling apparatus according to claim 6, wherein information about said dependent reference point (403) includes information about an operation designation for said first component till a movement from said dependent reference point (403) to said second reference point (402).

8. The assembling apparatus according to any one of claims 1 to 7, wherein information about said first reference point (401) includes information about an approach angle of said working portion (1) with respect to said first reference point (401) in an execution of an operation for holding said first component through said working portion (1).

9. The assembling apparatus according to any one of claims 1 to 8, wherein information about said second reference point (402) includes information about an approach angle of said working portion (1) with respect to said second reference point (402) in an execution of an assembling operation of said first component through said working portion (1).

10. The assembling apparatus according to any one of claims 1 to 9, wherein said first reference points (401) are determined every first component and one of said first reference points (401) is selected and set.

11. The assembling apparatus according to any one of claims 1 to 10, wherein said second reference points (402) are set every second component.

12. The assembling apparatus according to any one of claims 1 to 11, wherein said second components are constituted by a combination of a plurality of components.

13. The assembling apparatus according to any one of claims 1 to 12, further comprising a storage portion (5) for storing the three-dimensional model data of said first component and said second component which are prepared in advance.

14. An assembling method in an assembling apparatus comprising a working portion (1) for assembling a first component to be an assembling component (100) into a second component to be an assembled component (101), comprising the steps of:
(a) recognizing three-dimensional positions and postures of said first component and said second component; and
(b) controlling, based on the recognition of the three-dimensional positions and the postures in said step (a), an operation of said working portion (1) such that a first reference position (201) and a second reference position (202) are associated with each other, said first reference position (201) being set to said first component in an actual space which is recognized as a corresponding position to a predetermined first reference point (401) set to three-dimensional model data of said first component, said second reference position (202) being set to said second component in the actual space which is recognized as a corresponding position to a predetermined second reference point (402) set to three-dimensional model data of said second component,
wherein said second reference point (402) serves to designate a place related to an assembly of said first component over the three-dimensional model data of said second component.

15. An assembling operation program which is installed into a computer and is thus executed, thereby causing an apparatus for controlling said working portion (1) by said computer to function as said assembling apparatus according to any one of claims 1 to 13.
